# EUROPÄISCHE PATENTANMELDUNG

(11) **EP 0 978 442 A1**
(43) Veröffentlichungstag der Anmeldung: **09.02.2000**
(21) Anmeldenummer: 99114777.8
(22) Anmeldetag: 28.07.1999
(51) Int. Cl.: B62D 21/15, B62D 25/16, B60R 19/00, B60R 21/00

(54) **Karosserie für ein Fahrzeug**

(30) Priorität: 07.08.1998 DE 19835705
(71) Anmelder: Bayerische Motoren Werke Aktiengesellschaft, 80809 München (DE)
(72) Erfinder: Mieslinger, Stefan, 84034 Landshut (DE)

(57) **Zusammenfassung**

Aus der DE 32 43 756 A1 ist bereits ein selbsttragender Aufbau für einen Kraftwagen bekannt, bei dem durch ein in einem Radhaus in Höhe eines Seitenschwellers angeordnetes Kunststoff-Formteil bei einer Frontalkollision Stoßenergie in geringem Maße aufgenommen wird. Aufgabe der Erfindung ist es, eine Karosserie für ein Fahrzeug zu schaffen, bei dem die Absorption der bei einem Aufprallunfall entstehenden Stoßenergie vor der Fahrgastzelle erhöht ist.

Dies wird dadurch erreicht, daß der jeweilige an den Stoßfänger (3) angrenzende Hohlraum (24) mit einem energieabsorbierenden Bauteil (11) zumindest in Höhe des Stoßfängers (3) versehen ist und daß auf der dazu gegenüberliegenden Seite ein Deformationselement (12) in Höhe des Seitenschwellers (5) und/oder eines Längsträgers (4) und ggf. an einer Stirnwand (13) der Fahrgastzelle (7) angeordnet ist und daß das Bauteil (11) bzw. Deformationselement (12) so weit in einen Freiraum (8) des Radhauses (23) ragt, daß die Freigängigkeit des Rades (6) gewährleistet ist.

## Beschreibung

Die Erfindung betrifft eine Karosserie für ein Fahrzeug gemäß dem Oberbegriff des Anspruchs 1.

Aus der DE-OS 22 39 485 ist es bereits bekannt, Längsträger, die vor und hinter einer drucksteifen Fahrgastzelle angeordnet sind, als Hohlprofile auszubilden, die mit einem Kunststoffschaum oder dergleichen ausgefüllt sind. Durch diese Träger ist es möglich, die bei einem Aufprallunfall entstehende Stoßenergie umzuwandeln. Ein solcher Träger erstreckt sich beispielsweise von einem Stoßfänger bis zu einer Stirnwand der Fahrgastzelle. Nachteilig bei dieser Bauweise ist jedoch, daß in Höhe jeweils eines Seitenschwellers der Fahrgastzelle keine Maßnahmen vorgesehen sind, um die bei einem Aufprallunfall entstehende Stoßenergie zu absorbieren.

Aus der DE 32 43 756 A1 ist bereits ein selbsttragender Aufbau für einen Kraftwagen bekannt, bei dem als Fortsetzung des seitlichen Längsträgers oder Schwellers im Bereich eines vorderen Kotflügels ein mit dem Fahrzeug lösbar verbundenes Kunststoff-Formteil vorgesehen ist, dessen Außenkonturen sowohl dem seitlichen Längsträger als auch dem sich nach oben anschließenden Kotflügel angepaßt sind. Im Falle einer Frontalkollision kann ein nach hinten schiebendes Vorderrad das Kunststoff-Formteil leicht deformieren, so daß durch die Deformation auch Energie im geringen Umfang absorbiert wird.

Aufgabe der Erfindung ist es, eine Karosserie für ein Fahrzeug zu schaffen, bei dem die Absorption der bei einem Aufprallunfall entstehenden Stoßenergie vor der Fahrgastzelle erhöht ist.

Diese Aufgabe wird durch die Merkmale des Anspruchs 1 gelöst.

Bei der erfindungsgemäßen Karosserie werden die Freiräume, die für die Freigängigkeit des jeweiligen Rades im Fahrzeug vorhanden sind, zur Energieaufnahme in einem Crashfall genutzt. Zu diesem Zweck sind innerhalb dieser Freiräume geeignete Deformationselemente angeordnet. Ferner sind in einem Hohlraum zwischen dem vorderen und/oder hinteren Stoßfänger und dem dazugehörigen linken und rechten Radhaus energieabsorbierende Bauteile vorgesehen. Dadurch ist es möglich, daß die Räder definiert auf den jeweiligen Seitenschweller bei einem Crash auftreffen. Insgesamt wird durch die Anordnung der erfindungsgemäßen energieabsorbierenden Bauteile und Deformationselemente die Energieaufnahme durch den Schweller vergrößert.

In einer vorteilhaften Ausführungsform sind die Deformationselemente und/oder die energleabsorbierenden Bauteile fest in dem jeweiligen durch das Radhaus und dem Rad sowie dem durch die Lenkbewegung eines gelenkten Rades bestimmten Freiraum so angeordnet, daß eine Freigängigkeit der Räder gewährleistet ist. Die fest angeordneten Deformationselemente und/oder Bauteile können vorteilhafterweise ein Airbag oder Stoßenergieabsorptionselemente aus Kunststoff und/oder aus Metall, insbesondere aus Leichtmetall, in Form von Schaum und/oder mit einer Wabenstruktur oder mit einer geeigneten Profilausbildung sein. Der jeweilige Airbag kann vorteilhafterweise durch bereits im Fahrzeug vorhandene Beschleunigungssensoren mit dem Fahrer- und Beifahrerairbag bei einem Aufprall ausgelöst werden.

In einer weiteren vorteilhaften Ausführungsform sind das jeweilige erfindungsgemäße energieabsorbierende Bauteil und/oder Deformationselement beweglich angeordnet. Ein solches Deformationselement und/oder Bauteil kann beispielsweise mit einem Klappmechanismus versehen sein, der wie bei einem Airbag durch Beschleunigungssensoren ausgelöst wird. Das Bauteil bzw. das Deformationselement bewegt sich dann in die dafür vorgesehene Position zur Übertragung einer Stoßenergie.

Vorteilhafte Ausführungsformen der Erfindung werden nachstehend anhand der Zeichnungen beispielshalber beschrieben. Dabei zeigen:
- Fig. 1: eine Schnittansicht von oben in Höhe eines linken vorderen Rades eines Fahrzeuges, aus der die Anordnung eines energieabsorbierenden Bauteils und eines Deformationselementes vor und hinter dem Rad hervorgeht,
- Fig. 2: eine Schnittansicht von oben in Höhe eines linken vorderen Rades eines Fahrzeuges, das die Anordnung eines aus einer Ruheposition in eine Arbeitsposition bewegten energieabsorbierenden Bauteils bzw. Deformationselementes vor und hinter dem Rad zeigt und
- Fig. 3: eine Schnittansicht von der Seite eines fest angeordneten energieabsorbierenden Bauteils zwischen einem Stoßfänger und einem Rad sowie einem beweglich angeordneten Deformationselement zwischen dem Rad und einem Seitenschweller.

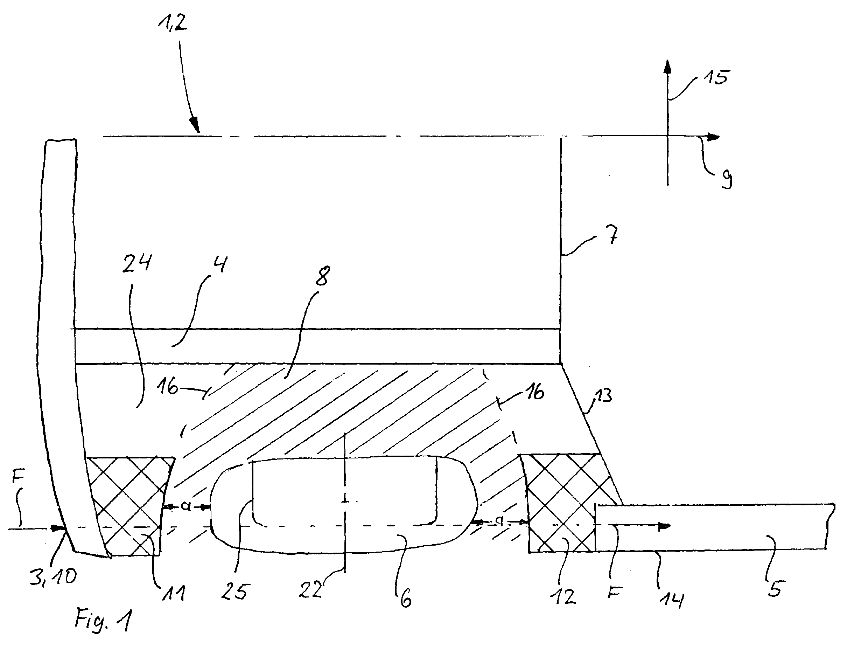

Fig. 1 zeigt die linke Hälfte eines prinzipiell dargestellten Vorderbaus 1 eines Kraftfahrzeuges 2. Schematisch ist ein vorderer Stoßfänger 3, ein Motor- oder Längsträger 4, ein Seitenschweller 5, ein Vorderrad 6 sowie teilweise eine Fahrgastzelle 7 dargestellt. In schraffierten Linien ist ein für das Vorderrad 6 erforderlicher Freiraum 8 für Lenkbewegungen eingezeichnet. An diesen Freiraum 8 schließt sich nach vorne in Fahrzeuglängsrichtung 9 ein energieabsorbierendes Bauteil 11 an, das fest oder beweglich in der Nähe oder direkt an einem äußeren Ende 10 des vorderen Stoßfängers 3 angeordnet ist. Die Anordnung des Bauteils 11 kann durch eine starre Befestigung oder durch ein Gelenk oder einen Klappmechanismus oder dergleichen beweglich erfolgen. Auf der dazu gegenüberliegenden Seite ist ein Deformationselement 12 an dem Seitenschweller 5 und an den Motor- oder Längsträger 4 und evtl. teilweise an einer Stirnwand 13 der Fahrgastzelle 7 angeordnet. Sowohl das Bauteil 11 als auch das Deformationselement 12 können sich von der Fahrzeugaußenhaut 14 in Fahrzeugquerrichtung 15 bis zu dem dazugehörigen Motor- oder Längsträger 4 so erstrecken, daß der durch strichlierte Linien 16 begrenzte Freiraum 8 gewährleistet ist. In einer anderen Ausführungsform stützt sich das Deformationselement 12 nur am Seitenschweller 5 ab.

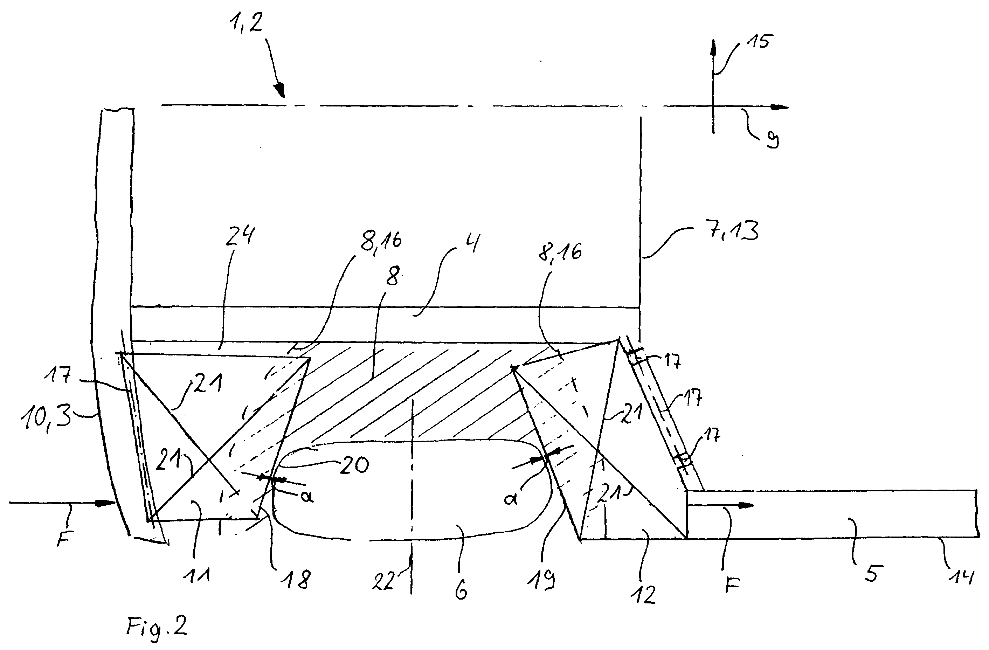

Die in der Fig. 2 gezeigte Ausführungsform unterscheidet sich von der in der Fig. 1 gezeigten Ausführungsform dadurch, daß das energieabsorbierende Bauteil 11 und das Deformationselement 12 über ein Gelenk oder einen Klappmechanismus 17 oder dergleichen in Höhe des Stoßfängers 3 bzw. der Stirnwand 13 der Fahrgastzelle 7 und/oder des Seitenschwellers 5 bzw. des Längsträgers 4 angeordnet sind. Ein Abstand a zwischen einem vorderen Ende 18 bzw. 19 des energieabsorbierenden Bauteils 11 bzw. des Deformationselementes 12 und der dazu gegenüberliegenden Reifenoberfläche 20 ist in der in der Fig. 2 gezeigten ausgeklappten oder verschwenkten Stellung auf ein Minimum reduziert und liegt bei a < 2 bis 25 mm.

Die vorderen Enden 18, 19 des energieabsorbierenden Bauteils 11 bzw. des Deformationselementes 12 verlaufen schräg oder trichterförmig sich verjüngend nach innen in Richtung des Längsträgers 4. Dadurch wird erreicht, daß das Rad 6 in seiner in der Fig. 2 gezeigten Stellung bei einem Aufprallunfall in seiner Lage verbleibt und die auf den Stoßfänger 3 einwirkende Stoßenergie über das energieabsorbierende Bauteil 11, das Rad 6 und das Deformationselement 12 auf den Seitenschweller 5 und den Motor- oder Längsträger 4 und ggf. auf die Stirnwand 13 der Fahrgastzelle 7 übertragen wird. In der Fig. 2 sind dasenergieabsorbierende Bauteil 11 und das Deformationselement 12 mit diagonal verlaufenden Streben oder Versteifungen 21 oder dgl. versehen, die eine ausreichende Beul-Steifigkeit des energieabsorbierenden Bauteils 11 bzw. des Deformationselementes 12 gewährleisten.

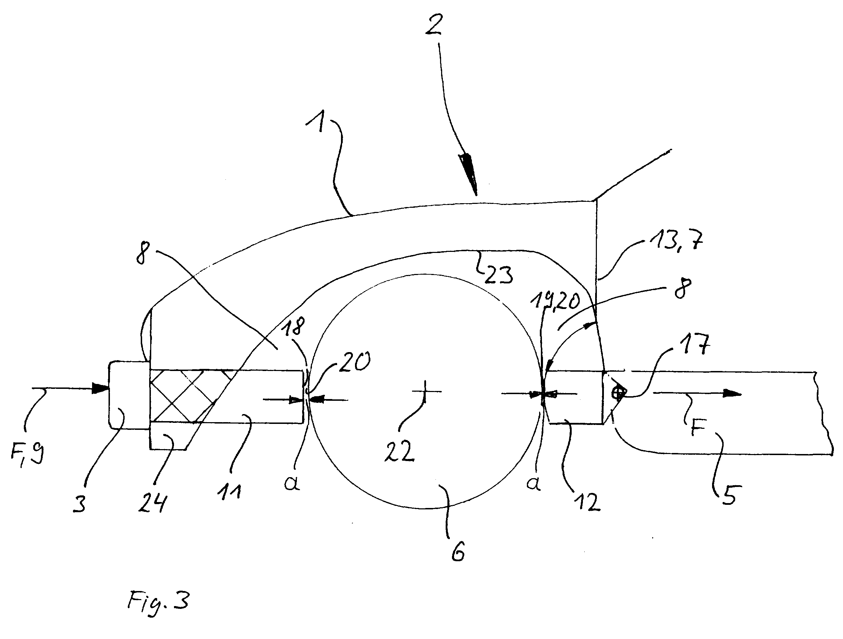

Aus der Fig. 3 geht hervor, daß das energieabsorbierende Bauteil 11 und das Deformationselement 12 in einer bevorzugten Ausführungsform in Höhe der Radmitte 22 und des Stoßfängers 3 verläuft. Ferner ist in der Fig. 3 gezeigt, daß die Abstände a zwischen dem vorderen Ende 18 bzw. 19 des Bauteils 11 bzw. des Deformationselementes 12 und der dazu gegenüberliegenden Reifenoberfläche 20 auf ein Minimum reduzierbar sind. Statt einem beweglich angeordneten Bauteil 11 bzw. Deformationselement 12 kann beispielsweise an der gleichen Stelle ein Airbag oder dergleichen vorgesehen sein. Der Airbag ist so gestaltet, daß der Airbag den Freiraum 8 zwischen dem Rad 6 und dem das Rad 6 umgebende Radhaus 23 zumindest in Höhe des Stoßfängers 3 und des Seitenschwellers 5 und ggf. des Längsträgers 4 ausfüllt. Bei einem ausgelösten Airbag ist das Rad 6 in seiner Lage eingeklemmt und die Stoßenergie wird über den Stoßfänger 3, das Bauteil 11, das Rad 6 und das Deformationselement 12 auf den Seitenschweller 5 übertragen.

## Patentansprüche

1. Karosserie für ein Fahrzeug, mit einer Fahrgastzelle, mit einer an der Fahrgastzelle angebundenen Tragstruktur zur Anordnung von Fahrzeugbauteilen, wie einem Motor, und zur Aufnahme von auf das Fahrzeug einwirkende Stoßenergie, mit vorderen und hinteren Rädern, die jeweils von einem Radhaus umgeben sind, wobei das jeweilige Radhaus in Fahrzeuglängsrichtung auf der einen Seite an einen Seitenschweller angrenzt und auf der dazu gegenüberliegenden Seite durch einen Hohlraum von einem in Fahrzeugquerrichtung verlaufenden Stoßfänger beabstandet ist, dadurch gekennzeichnet, daß der jeweilige an den Stoßfänger (3) angrenzende Hohlraum (24) mit einem energieabsorbierenden Bauteil (11) zumindest in Höhe des Stoßfängers (3) versehen ist und daß auf der dazu gegenüberliegenden Seite ein Deformationselement (12) in Höhe des Seitenschwellers (5) und/oder eines Längsträgers (4) und ggf. an einer Stirnwand (13) der Fahrgastzelle (7) angeordnet ist und daß das Bauteil (11) bzw. Deformationselement (12) so weit in einen Freiraum (8) des Radhauses (23) ragt, daß die Freigängigkeit des Rades (6) gewährleistet ist.

2. Karosserie nach Anspruch 1, dadurch gekennzeichnet, daß das energieabsorbierende Bauteil (11) und/oder das Deformationselement (12) fest oder beweglich angeordnet sind.

3. Karosserie nach den Ansprüchen 1 oder 2, dadurch gekennzeichnet, daß das beweglich angeordnete Bauteil (11) bzw. Deformationselement (12) in eine Stellung vor der Reifenoberfläche (20) des Rades (6) bewegbar ist, daß ein Abstand (a) zwischen einem vorderen Ende (18, 19) des Bauteils (11) bzw. des Deformationselementes (12) und der Reifenoberfläche (20) minimal ist.

4. Karosserie nach einem der vorhergehenden Ansprüche,
dadurch gekennzeichnet, daß das energieabsorbierende Bauteil (11) bzw. das Deformationselement (12) aus Kunststoff und/oder Metall besteht.

5. Karosserie nach einem der vorhergehenden Ansprüche,
dadurch gekennzeichnet, daß das Bauteil (11) bzw. das Deformationselement (12) mit Schaum gefüllt ist und/oder eine Wabenstruktur und/oder ein energieabsorbierendes Profil aufweist.

6. Karosserie nach einem der vorhergehenden Ansprüche,
dadurch gekennzeichnet, daß die Verlagerung des Bauteils (11) und/oder des Deformationselementes (12) aus einer Ruhestellung außerhalb des Freiraumes (8) in eine zur Stoßabsorption geeignete Stellung, initiiert durch einen Beschleunigungssensor oder dergleichen, erfolgt.
